# EUROPEAN PATENT SPECIFICATION

(11) **EP 1 114 959 B1**
(45) Date of publication and mention of the grant of the patent: **26.04.2006**
(21) Application number: 00127667.4
(22) Date of filing: 18.12.2000
(51) Int. Cl.: F16L 11/10

(54) **High-strength, durably-flexible hose for hydraulic coupling applications**
Hochfester, dauerbiegsamer Schlauch für hydraulische Kupplungen
Tuyaux hautement résistant et durablement élastique pour des raccords hydrauliques

(30) Priority: 04.01.2000 IT MI20000003 U
(43) Date of publication of application: 11.07.2001
(73) Proprietor: Parigi Group International S.p.A., 20052 Monza MI (IT)
(72) Inventor: Parigi, Cesare, 20052 Monza (MI) (IT)
(74) Representative: Cicogna, Franco

(56) References cited:
- US-A- 4 668 318
- US-A- 5 778 941
- US-A- 5 973 268

## Description

### BACKGROUND OF THE INVENTION

The present invention relates to a high strength and durability flexible hose, which has been specifically designed for hydraulic coupling applications in general.

As is known, prior flexible pipes, as conventionally used for performing hydraulic couplings in general, such as for faucets and the like, are usually made by a flexible duct, of rubber or a plastics material, which is coupled, at the end portions thereof, to coupling fittings.

Said coupling fittings, in particular, are arranged at the end portions of a braided sheath, holding the duct therein, and made of metal threads, providing a barrier for the pressure inside the flexible duct or hose, for preventing it from breaking.

Such a hose is shown for example in document US 4 668 318.

In prior solutions, said hoses are frequently used in chemically aggressive environments which can corrode the metal threads, with a consequent failure of the outer sheath, or a decrease of the mechanical strength thereof, with consequent obvious disadvantages.

### SUMMARY OF THE INVENTION

Accordingly, the aim of the present invention is to overcome the above mentioned drawbacks, by providing a flexible hose, having a high mechanical strength and duration, and specifically designed for hydraulic coupling applications in general, provided with an outer surface which does not modify its mechanical features in the time, since it cannot be substantially affected by outer chemically aggressive environments.

Within the scope of the above mentioned aim, a main object of the present invention is to provide such a flexible hose, which, while having greatly improved features, can be made by conventional making methods.

Yet another object of the present invention is to provide such a flexible hose which, due to its specific making features, is very reliable and safe in operation.

Yet another object of the present invention is to provide such a flexible hose which can be easily made starting from easily available elements and materials and which, moreover, is very competitive from a mere economic standpoint.

According to one aspect of the present invention, the above mentioned aim and objects, as well as yet other objects, which will become more apparent hereinafter, are achieved by a high strength and durability flexible hose, specifically designed for hydraulic coupling applications in general, comprising a flexible duct provided with coupling end fittings and housed inside a braided sheath, characterized in that said sheath is made of polyester threads.

### BRIEF DESCRIPTION OF THE DRAWINGS

Further characteristics and advantages of the present invention will become more apparent hereinafter from the following detailed description of a high strength and durability flexible hose, specifically designed for hydraulic coupling applications in general, and being illustrated, by way of an indicative, but not limitative, example, in the figures of the accompanying drawings, where:

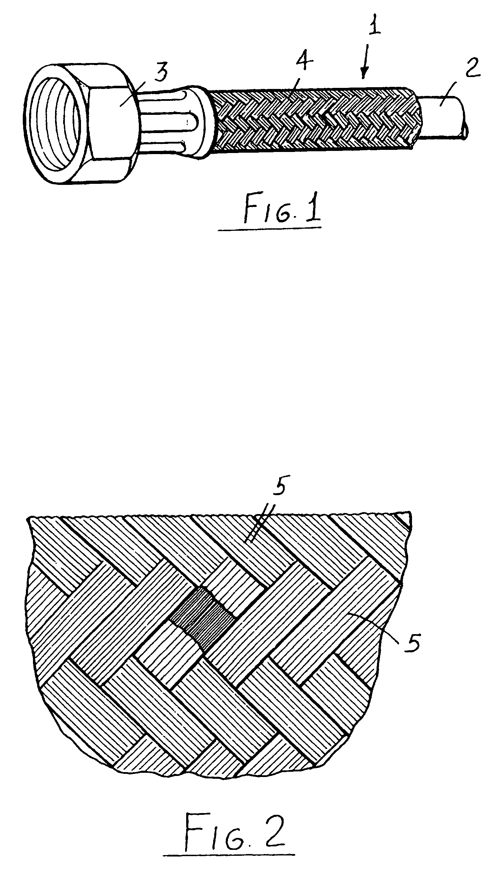

Figure 1 is a schematic perspective view illustrating an end portion of the flexible hose according to the present invention;
Figure 2 illustrates, on an enlarged scale, a detail of the encompassing sheath, and clearly shows the braided threads thereof;

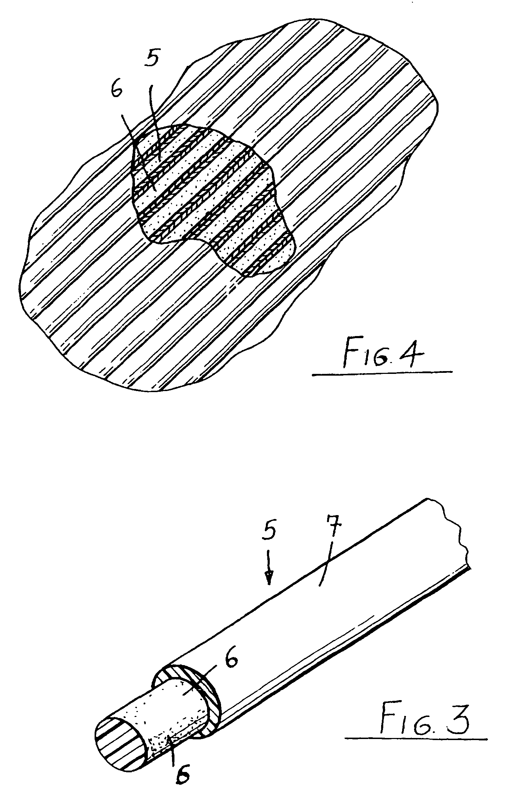

Figure 3 is a further schematic view illustrating a thread of the encompassing sheath; and
Figure 4 is a partially broken-away view illustrating a plurality of threads arranged in an adjoining relationship.

### DESCRIPTION OF THE PREFERRED EMBODIMENTS

With reference to the number references of the above mentioned figures, the high mechanical strength and durability flexible hose, specifically designed for hydraulic coupling applications in general, which has been generally indicated by the reference number 1, comprises a flexible duct 2, which is preferably made of a rubber or plastics material, and which, at the end portions thereof, is coupled to coupling fittings 3, which can be of any desired types.

In particular, the duct 2 is arranged inside an encompassing braided sheath 4, made in a per se known manner of a plurality of adjoining threads which are braided in sets.

The main feature of the invention is that the threads 5 are provided with an inner core 6 which is made of a polyester material; said inner core being coated by a coating layer 7 of polyvinylchloride, provided for perfectly protecting the polyester thread.

Advantageously, said polyester thread has a count of Dtex 1100 and a thread thickness of 0.63 mm.

The weight of the thread is of 0.39 g/m, and its ultimate breaking load is of 8.5 Kg/cm.

As said thread is heat processed at a temperature of 180°C for 4 minutes, it is thermally shrunk in a rate from 8 to 10 %.

The thus made thread allows to make the encompassing sheath by conventional making methods, with the advantage of providing the coating of the flexible duct having a practically unlimited time duration.

The encompassing sheath can also be made by arranging the sheath threads 5 to provide a single coating layer.

Said coating layer, in particular, can be made in different colors or it can be clear, and the colors can be assumed by the inner polyester core.

From the above disclosure it should be apparent that the invention fully achieves the intended aim and objects.

In particular, a flexible hose has been provided, which has a very high mechanical strength and durability and which, being provided with an outer sheath fully made of a plastics material, is absolutely unalterable in the time, while having, as stated, a very high mechanical strength.

It should be apparent that the constructional details as well as the contingent shapes and size can be modified as required.

## Claims

1. A high strength and durability flexible hose (1), for hydraulic coupling applications in general, comprising a flexible tubular duct (2) coupled to coupling end fittings (3) and braided tubular means (4) coupled to said tubular duct, **characterized in that** said braided tubular means comprises a single braided sheath encompassing said flexible tubular duct so as to provide the outermost circular surface of said flexible hose, that said single braided sheath (4) is made of polyester threads (5), and that said polyester threads (5) are coated by a polyvinylchloride layer.

2. A flexible hose, according to claim 1, **characterized in that** said polyester thread (5) has a weight up to 0.39 g/m.

3. A flexible hose, according to claim 1, , **characterized in that** said polyester thread (5) has a thickness of 0.63 mm.

4. A flexible hose, according to claim 1, **characterized in that** said polyester thread (5) has a count of dTex 1100.

5. A flexible hose, according to claim 1, **characterized in that** said polyester thread (5) has an ultimate breaking load of 8.5 Kg/cm.

6. A flexible hose, according to claim 1, **characterized in that** said polyester thread (5) has a thermal shrinkage of 8-10% at a temperature of 180°C for 4 minutes.

7. A flexible hose, according to one or more of the preceding claims, **characterized in that** said coating layer is either clear or transparent.

## Patentansprüche

1. Hochfester, dauerbiegsamer Schlauch (1) für hydraulische Kupplungsanwendungen allgemein, umfassend eine biegsame röhrenförmige Leitung (2), die an Kupplungsendanschlussstücke (3) angekoppelt ist, und geflochtene röhrenförmige Mittel (4), die an die röhrenförmige Leitung angekoppelt sind, **dadurch gekennzeichnet, dass** die geflochtenen röhrenförmigen Mittel einen einfachen geflochtenen Mantel umfassen, der die biegsame röhrenförmige Leitung einschließt, um die äußerste kreisförmige Oberfläche des biegsamen Schlauchs bereitzustellen, dass der einfache geflochtene Mantel (4) aus Polyesterfäden (5) besteht, und dass die Polyesterfäden (5) mit Polyvinylchlorid beschichtet sind.

2. Biegsamer Schlauch nach Anspruch 1, **dadurch gekennzeichnet, dass** der Polyesterfaden (5) ein Gewicht von bis zu 0,39 g/m aufweist.

3. Biegsamer Schlauch nach Anspruch 1, **dadurch gekennzeichnet, dass** der Polyesterfaden (5) eine Dicke von 0,63 mm aufweist.

4. Biegsamer Schlauch nach Anspruch 1, **dadurch gekennzeichnet, dass** der Polyesterfaden (5) eine dTex-Zahl von 1100 aufweist.

5. Biegsamer Schlauch nach Anspruch 1, **dadurch gekennzeichnet, dass** der Polyesterfaden (5) eine Bruchlast von 8,5 kg/cm aufweist.

6. Biegsamer Schlauch nach Anspruch 1, **dadurch gekennzeichnet, dass** der Polyesterfaden (5) eine thermische Schrumpfung von 8 bis 10 % bei einer Temperatur von 180 °C für 4 Minuten aufweist.

7. Biegsamer Schlauch nach einem oder mehreren der vorhergehenden Ansprüche, **dadurch gekennzeichnet, dass** die Deckschicht entweder klar oder durchsichtig ist.

## Revendications

1. Tuyau flexible (1) de haute résistance et d'une grande longévité, pour des liaisons hydrauliques en général, comprenant une conduite tubulaire flexible (2) reliée à des raccords d'extrémité (3) et un élément tubulaire tressé (4) relié à ladite conduite tubulaire, **caractérisé en ce que** ledit élément tubulaire tressé comprend une simple gaine tressée entourant ladite conduite tubulaire flexible, qui forme la surface circulaire externe dudit tuyau flexible, **en ce que** ladite simple gaine tressée (4) est constituée de brins de polyester (5) et **en ce que** lesdits brins de polyester (5) sont revêtus d'une couche de polychlorure de vinyle.

2. Tuyau flexible selon la revendication 1, **caractérisé en ce que** ledit brin de polyester (5) a un poids pouvant aller jusqu'à 0,39 g/m.

3. Tuyau flexible selon la revendication 1, **caractérisé en ce que** ledit brin de polyester (5) a une épaisseur de 0,63 mm.

4. Tuyau flexible selon la revendication 1, **caractérisé en ce que** ledit brin de polyester (5) a un titrage de 1100 dTex.

5. Tuyau flexible selon la revendication 1, **caractérisé en ce que** ledit brin de polyester (5) présente une charge de rupture de 8,5 kg/cm.

6. Tuyau flexible selon la revendication 1, **caractérisé en ce que** ledit brin de polyester (5) présente un retrait thermique de 8 à 10% à une température de 180°C pendant 4 minutes.

7. Tuyau flexible selon l'une ou plusieurs des revendications précédentes, **caractérisé en ce que** ladite couche de revêtement est soit incolore soit transparente.
